# EUROPEAN PATENT APPLICATION

(11) **EP 4 316 711 A1**
(43) Date of publication of application: **07.02.2024**
(21) Application number: 22864412.6
(22) Date of filing: 26.08.2022
(51) Int. Cl.: B23C 3/12, B23B 31/08, B23D 79/00

(54) **DEBURRING HOLDER**

(30) Priority: 31.08.2021 JP 2021141759
(71) Applicant: Kato Mfg. Co., Ltd., Hiratsuka-shi, Kanagawa, 254-0076 (JP)
(72) Inventor: Nguyen, Dinh Dinh, Hiratsuka-shi, Kanagawa 254-0076 (JP)
(74) Representative: Geskes, Christoph
(86) International application number: PCT/JP2022/032148
(87) International publication number: WO 2023/032828

(57) **Abstract**

Provided is a deburring holder including multiple compression springs, in which the combination of the compression springs can be changed according to the type of workpiece. The deburring holder includes a main compression spring to receive a load from a deburring tool, a first sub-compression spring to receive a load via a spring-receiving inner cylinder, a second sub-compression spring to receive a load via a spring-receiving outer cylinder, and a step cover. The step cover allows for changing the combination of the compression springs between a state in which only the main compression spring receives the load, a state in which the main compression spring and the first sub-compression spring receive the load in parallel, a state in which the main compression spring and the second sub-compression spring receive the load in parallel, and the main compression spring, the first sub-compression spring, and the second sub-compression spring receive the load in parallel.

## Description

### Technical Field

The present invention relates to a deburring holder, and more specifically, to a deburring holder that is provided with multiple compression springs, in which the combination of the compression springs can be changed according to the type of workpiece.

### Background Art

To remove irregularities on the surface of a workpiece, a telescopic holder is generally used for deburring. The telescopic holder is capable of deburring a workpiece uniformly even if the workpiece has an uneven shape, and is responsive to small load changes. To be responsive to small load changes, a telescopic holder should be provided with a spring with a small spring constant. If a telescopic holder with a slightly stronger spring constant is needed, for example, it is necessary to prepare another telescopic holder with a spring having a different spring constant. To set multiple loads with a deburring holder having a single spring, the dimensions of the holder become unrealistic because the free length of the spring used becomes too long.

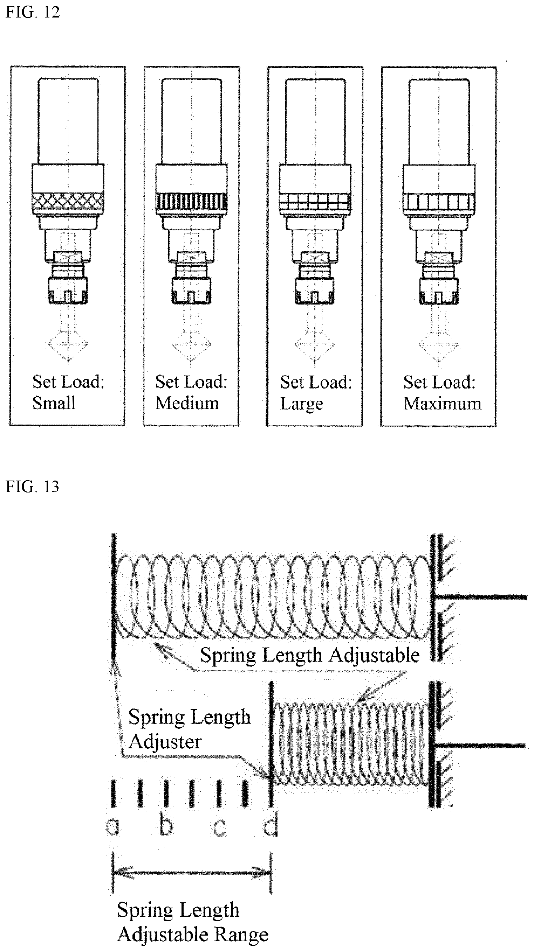

The applicant of the present invention introduced a tool for deburring and chamfering in Patent Document 1 (Japan Unexamined Patent Application Publication No. 2019-198937). In the deburring holder disclosed in Patent Document 1, only one load can be set with one holder. Therefore, some users prepare four deburring holders, as shown in FIG. 12, each of which is loaded with a spring whose spring constant is different from each other, with set loads of, for example, "small," "medium," "large," and "maximum," from which a suitable one is chosen. This allows a user to select a deburring holder with a load appropriate for the workpiece conditions. However, there is a demand for a deburring holder that can set multiple load settings in a single holder, and that can be responsive to small load changes.

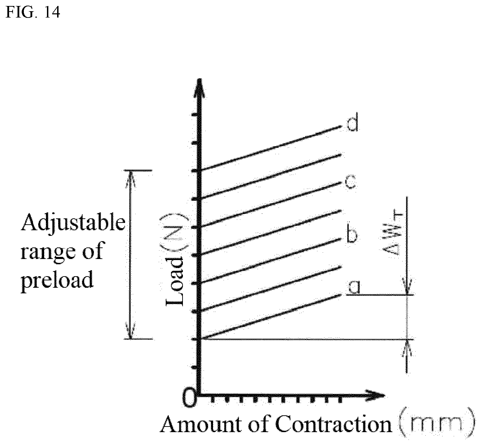

Another conventional technique used for a deburring holder, as shown in FIG. 13, is to vary the length of a single spring to adjust the preloads of a deburring holder. The length of the spring is adjusted by rotating a screw, which is a supporting part of the spring, using an adjusting device. As an example, the preload is at four levels from a to d. As shown in FIG. 14, to adjust the preload with a single spring, a spring with a relatively large spring constant is used for a deburring holder to avoid the spring length being long. In that case, the slope of ΔWT is large, and the spring constant is constant regardless of the preload. Therefore, even if the preload is "small" indicated by "a," because the load change is large, the variation in chamfer width may become large in some workpieces. In addition, to make the preload adjustable over a wide load range with a single spring, it is necessary to adjust the spring contraction over a wide range of load intensity, which increases the number of times the adjustment screw needs to be turned. This makes the adjustment process time-consuming, and it is difficult for a user to recognize the current load setting values. To perform these tasks without making any mistakes is burdensome for the operators.

### Prior-art Document

### Patent Document

Patent Document 1: Japanese Unexamined Patent Application Publication No. 2019-198937

### Summary of the Invention

### Technical Problem

The present invention was made to address the previously mentioned problems, and the object of the present invention is to provide a deburring holder that is provided with multiple compression springs, in which the combination of the compression springs can be changed according to the type of workpiece. In other words, the object of the present invention is to provide a deburring holder that has a compact structure with multiple compression springs, that can dramatically improve the adjustment efficiency, and that allows the load setting values to be instantly recognized.

### Solution to Problem

A deburring holder according to Claim 1 is configured such that a deburring tool is to be removably inserted from a lower end of a main body. The deburring holder includes a main compression spring provided inside the main body to directly receive a load from the deburring tool via the main body, one or more sub-compression springs to receive the load from the deburring tool via a spring-receiving cylinder provided inside the main body, and a step cover rotatably provided on the main body to be engaged with or disengaged from the spring-receiving cylinder, wherein the step cover allows for changing the combination of the compression springs between a state in which only the main compression spring receives the load, and a state in which the step cover engaging with the spring-receiving cylinder allows any one of the sub-compression springs or two or more of the sub-compression springs to receive the load with the main compression spring in parallel.

A deburring holder according to Claim 2 is configured such that a deburring tool is to be removably inserted from a lower end of a main body. The deburring holder includes a main compression spring provided inside the main body to directly receive a load from the deburring tool via the main body, a first sub-compression spring to receive a load from the deburring tool via a spring-receiving inner cylinder, a second sub-compression spring to receive a load from the deburring tool via a spring-receiving outer cylinder, the second sub-compression spring having a spring constant larger than the spring constant the first sub-compression spring has, and a step cover rotatably provided on the main body to be engaged with or disengaged from the spring-receiving inner cylinder and the spring-receiving outer cylinder. The step cover allows for changing the combination of the compression springs between a state in which only the main compression spring receives the load, a state in which the step cover engaging with the spring-receiving inner cylinder allows the main compression spring and the first sub-compression spring to receive the load in parallel, a state in which the step cover engaging with the spring-receiving outer cylinder allows the main compression spring and the second sub-compression spring to receive the load in parallel, and a state in which the step cover engaging with the spring-receiving inner cylinder and the spring-receiving outer cylinder allows the main compression spring, the first sub-compression spring, and the second sub-compression spring to receive the load in parallel.

The deburring holder further includes long pins provided on the spring-receiving inner cylinder and short pins provided on the spring-receiving outer cylinder, the spring-receiving inner cylinder being assembled inside the spring-receiving outer cylinder. The combination of the compression springs is changed by the long pins and short pins on the assembled cylinders being engaged with any of the combinations of grooves that are formed on the inner surface of the step cover. The combinations are shallow grooves and shallow grooves, shallow grooves and deep grooves, and deep grooves and shallow grooves.

The deburring holder further includes a step spring that biases the step cover upward.

The deburring holder further includes a dustproof cover with a dust filter provided on the outer side of the lower part of the main body.

The deburring holder further includes a dustproof cover having a bellows shape provided on the outer side of the lower part of the main body, wherein the dustproof cover is fixed to the main body at the cover's lower end to extend and contract in accordance with the vertical movement of the main body.

### Advantageous Effects of the Invention

The deburring holder of the present invention stated in Claim 1 exhibits the following effects.
[a] The deburring holder of the present invention includes a main compression spring, one or more sub-compression springs to receive a load via a spring-receiving cylinder, and a step cover rotatably provided on a main body to be engaged with or disengaged from the spring-receiving cylinder. The deburring holder can change the combination of the compression springs between a state in which only the main compression spring receives the load and a state in which any one of the sub-compression springs or two or more of the sub-compression springs receive the load with the main compression spring in parallel. This feature eliminates the need for users to prepare multiple deburring holders to deal with different loads in deburring.
[b] The deburring holder of the present invention can accommodate multiple springs having different spring constants within a single holder.

The deburring holder of the present invention stated in Claim 2 exhibits the following effects.
[a] The deburring holder includes a first sub-compression spring, a second sub-compression spring, and a step cover in addition to a main compression spring. The combination of the compression springs can be changed using the step cover between a state in which only the main compression spring is used, a state in which the main compression spring and the first sub-compression spring are used in parallel, a state in which the main compression spring and the second sub-compression spring are used in parallel, and a state in which the main compression spring, the first sub-compression spring, and the second sub-compression spring are used in parallel.
[b] Because the first and second sub-compression springs are introduced in addition to the main compression spring, the strength of the combination of the compression springs can be adjusted in four levels. By making the spring constant of the main compression spring small, a compression spring having a weak spring force can be introduced. This makes the deburring holder suitable for processing workpieces in which the variation in chamfer width needs to be small. Compression springs are used in parallel, which allows the spring force of the deburring holder to be gradually increased. This makes the deburring holder suitable for processing workpieces in which a spring with a large spring constant is required.
[c] The step cover is configured to be rotatable and, according to an example, the deburring holder can change the load in four levels by simply turning the step cover 180° (or 90° to the left or right). The step cover is provided with numbers indicating the position of the rotated step cover relative to the shank, which allows a user to immediately recognize the load during the adjustment or during the use of the deburring holder.

The deburring holder of the present invention stated in Claim 3 exhibits the following effects. The deburring holder includes long pins provided on the spring-receiving inner cylinder, and short pins provided on the spring-receiving outer cylinder, where the long pins and short pins are configured to engage with any of the combinations of shallow grooves and shallow grooves, shallow grooves and deep grooves, and deep grooves and shallow grooves, the grooves being formed on an inner surface of the step cover. This allows the deburring holder to change the combination of the compression springs to be used, resulting in the operations as follows.
[a] If the long pins are engaged with the shallow grooves, and the short pins are engaged with the shallow grooves, only the main compression spring extends and contracts.
[b] If the long pins are engaged with the deep grooves, and the short pins are engaged with the shallow grooves, the first sub-compression spring received by the spring-receiving inner cylinder and the main compression spring extend and contract in parallel.
[c] If the long pins are engaged with the shallow grooves, and the short pins are engaged with the deep grooves, the second sub-compression spring received by the spring-receiving outer cylinder and the main compression spring extend and contract in parallel.
[d] If the long pins are engaged with the deep grooves, and the short pins are engaged with the deep grooves, the first sub-compression spring received by the spring-receiving inner cylinder, the second sub-compression spring received by the spring-receiving outer cylinder, and the main compression spring extend and contract in parallel.

The deburring holder of the present invention stated in Claim 4 exhibits the following effects. The step cover is configured to be biased upward by a step spring, whereby pushing down the step cover allows the long pins or short pins to be disengaged from the grooves to release the engagement of the step cover with the spring-receiving cylinder. Pushing down the step cover allows for rotating the step cover.

The deburring holder of the present invention stated in Claim 5 exhibits the following effects. The deburring holder is provided with a dustproof cover with a dust filter on the outer side of the lower part of the main body, which prevents iron powder from getting into the gap between the movable main body and the lower end portion of the shank.

The deburring holder of the present invention stated in Claim 6 exhibits the following effects. The deburring holder is provided with a dustproof cover having a bellows shape on the outer side of the lower part of the main body, and the dustproof cover is fixed to the main body at the cover's lower end. This allows the dustproof cover to extend and contract in accordance with the vertical movement of the main body to prevent iron powder from getting into the gap between the main body and the lower end portion of the shank.

### Brief Description of Drawings

- FIGs. 1(a), 1(b), and 1(c): show the overall structure of a deburring holder according to the present invention. FIG. 1(a) shows a cross section taken along the A-A' line shown in FIG. 1(b), FIG. 1(b) shows a cross section taken along the B-B' line shown in FIG. 1(a), and FIG. 1(c) is an external view of the side surface of the upper part of a step cover.
- FIGs. 2(a) and 2(b): are diagrams showing a spring-receiving inner cylinder and a spring-receiving outer cylinder in FIG. 1. FIG. 2(a) is an external view of the spring-receiving inner cylinder and the spring-receiving outer cylinder before they are assembled. FIG. 2(b) shows the state where the spring-receiving inner cylinder has been inserted into the spring-receiving outer cylinder.
- FIG. 3: shows a shank where the step cover shown in FIG. 1 has been removed.
- FIG. 4: illustrates a view showing the state where the spring-receiving inner cylinder has been inserted into the spring-receiving outer cylinder, an external view of the step cover, and a view of the side surface of the upper part of the step cover.
- FIG. 5: illustrates the case in which the deburring holder according to the present invention operates only with a main compression spring.
- FIG. 6: illustrates the case in which the deburring holder according to the present invention operates with the main compression spring and a first sub-compression spring.
- FIG. 7: illustrates the case in which the deburring holder according to the present invention operates with the main compression spring and a second sub-compression spring.
- FIG. 8: illustrates the case in which the deburring holder according to the present invention operates with the main compression spring, the first sub-compression spring, and the second sub-compression spring.
- FIG. 9 is: a graph showing the relationship between the load (N) and the amount of contraction (mm) of the deburring holder according to the present invention.
- FIG. 10: illustrates how the combination of the main compression spring, the first sub-compression spring, and the second sub-compression spring is achieved.
- FIGs. 11(a) and 11(b): show the installation situation of a dustproof cover. FIG. 11(a) shows the case where a dust filter is provided to a dustproof cover, and FIG. 11(b) shows the case where the dustproof cover is configured to have a bellows shape.
- FIG. 12: is an example of a conventional deburring holder, where four deburring holders each having a spring with a different spring constant are shown.
- FIG. 13: is a diagram of an example of a conventional deburring holder where the preload of a deburring holder is adjusted by varying the length of a single spring.
- FIG. 14: is a graph showing the amount of contraction (mm) against load (N) where multiple preloads are applied to a single spring in an example of a conventional deburring holder

### Description of the Embodiments

### Example

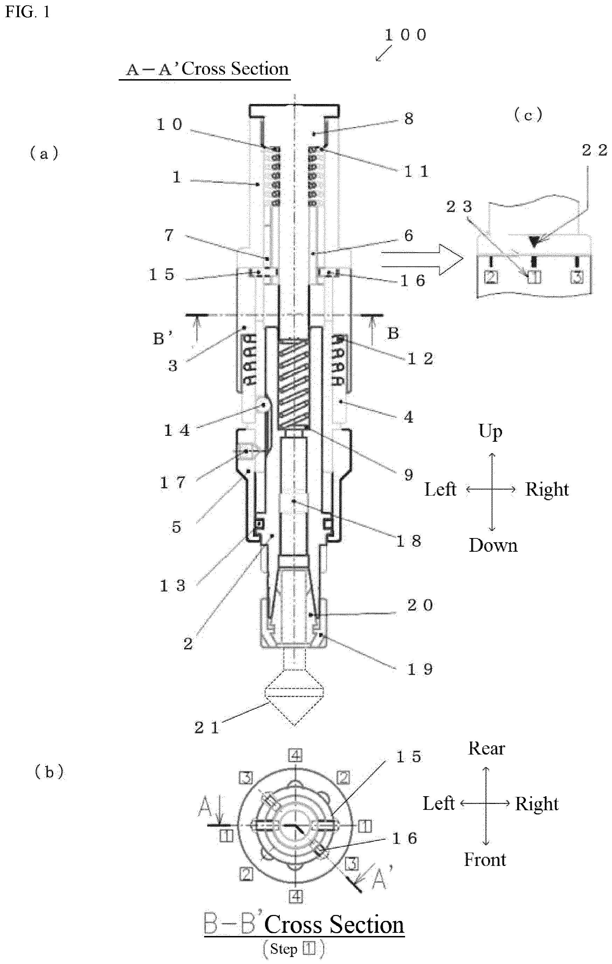

Hereinafter, a deburring holder according to the present invention will be described in detail with reference to the accompanying drawings. The example shown in FIGs. 1 to 11 is a deburring holder that includes one main compression spring and two sub-compression springs, in which four load levels can be set.

FIGs. 1(a), 1(b), and 1(c) show the overall structure of a deburring holder 100 according to the present invention. FIG. 1(a) shows a cross section taken along the A-A' line shown in FIG. 1(b). FIG. 1(b) shows a cross section taken along the B-B' line shown in FIG. 1(a). FIG. 1(c) is an external view of the side surface of the upper part of a step cover. The deburring holder 100 is to be equipped with a deburring tool 21 by a tapered collet 20 and a nut 19 that are provided at the lower end of a main body 2. The upward load from a workpiece received by the deburring tool is transmitted to a main compression spring 9 by the tapered collet 20 gripping the deburring tool and the main body 2. An adjusting screw 18 is used to adjust the position of the edge of the deburring tool 21, but may not be used if a shank is long. Because the top of the main compression spring 9 is held by a shank cap 8, the main compression spring 9 contracts when an upward load is applied thereto and extends when the upward load is removed. The load from the deburring tool 21 is received by the main body 2. The main body 2 is a movable component that is pushed upwards by the load where the main compression spring 9 contracts and that is pushed downwards where the main compression spring 9 springs back.

This example includes a first sub-compression spring 10 and a second sub-compression spring 11 in addition to the main compression spring 9. The spring constants are k1 for the main compression spring 9, k2 for the first sub-compression spring 10, and k3 for the second sub-compression spring 11. The first sub-compression spring 10 and the second sub-compression spring 11 are stacked on the shaft of the shank cap 8 such that the first sub-compression spring 10 is on the inside and the second sub-compression spring 11 is on the outside. The first sub-compression spring 10 and the second sub-compression spring 11 are provided with the coils wound in opposite directions to each other to prevent the springs from being entangled with each other to cause a jam. The main compression spring 9, the first sub-compression spring 10, and the second sub-compression spring 11 are covered by a shank 1.

The first sub-compression spring 10 is received by a spring-receiving inner cylinder 6. The second sub-compression spring 11 is received by a spring-receiving outer cylinder 7. The spring-receiving inner cylinder 6 and spring-receiving outer cylinder 7 are collectively referred to as a spring-receiving cylinder. At the bottom of the spring-receiving inner cylinder 6, two long pins 15 protrude on both sides of the cylinder. At the bottom of the spring-receiving outer cylinder 7, two short pins 16 protrude on both sides of the cylinder. At the underside of the spring-receiving inner cylinder 6 and the spring-receiving outer cylinder 7, a step cover 3 used for changing the combination of the springs is provided. The step cover 3 is biased upward by a step spring 12. Accordingly, the step cover 3 can be manually pushed down. Pushing down the step cover 3 allows the step cover 3 to be engaged with or disengaged from the spring-receiving inner cylinder 6 and spring-receiving outer cylinder 7. At the underside of the step spring 12, a cover 4 is provided. A dustproof cover 5 is provided such that the lower part thereof covers the main body 2. The dustproof cover 5 is provided with a dust filter 13. A steel ball 14 is provided to the shank 1.

FIG. 1(b) shows a cross section taken along the B-B' line shown in FIG. 1(a). Figure 1(b) shows a cross-section of the step cover 3. On the outer surface of the step cover 3, numbers [1] through [4], which indicate a step number 23, are stamped. The step number is enclosed by a square and stamped counterclockwise in the order of [1], [2], [4], [3], [1], [2], [4], [3], as seen from the bottom. The inner surface of the step cover 3 is provided with eight semicircular grooves at 45° intervals to correspond to the stamped step numbers. The semicircular grooves consist of shallow and deep grooves. If the long pins 15 engage with the shallow grooves, the spring-receiving inner cylinder 6 cannot descend inside the step cover 3, which blocks the operation of the first sub-compression spring 10. If the long pins 15 engage with the deep grooves, the spring-receiving inner cylinder 6 descends inside the step cover 3 to touch the upper end of the main body 2, which allows the first sub-compression spring 10 to extend and contract. Similarly, if the short pins 16 engage with the shallow grooves, the operation of the second-sub compression spring 11 is blocked. If the short pins 16 engage with the deep grooves, the second sub-compression spring 11 can extend and contract.

FIG. 1(c) is an external view of the side surface of the upper part of the step cover 3. On the outer surface of the upper part of the shank 1, a triangular mark 22 is stamped, and the stamped number [1] indicating the step number 23 on the step cover 3 is aligned with the triangular mark 22. In this case, as shown in FIG. 1(b), the long pins 15, 15, engage with the grooves on the inner surface of the step cover 3 corresponding to the stamped numbers [1], [1], and the short pins 16, 16, engage with the grooves on the inner surface of the step cover 3 corresponding to the stamped numbers [3], [3].

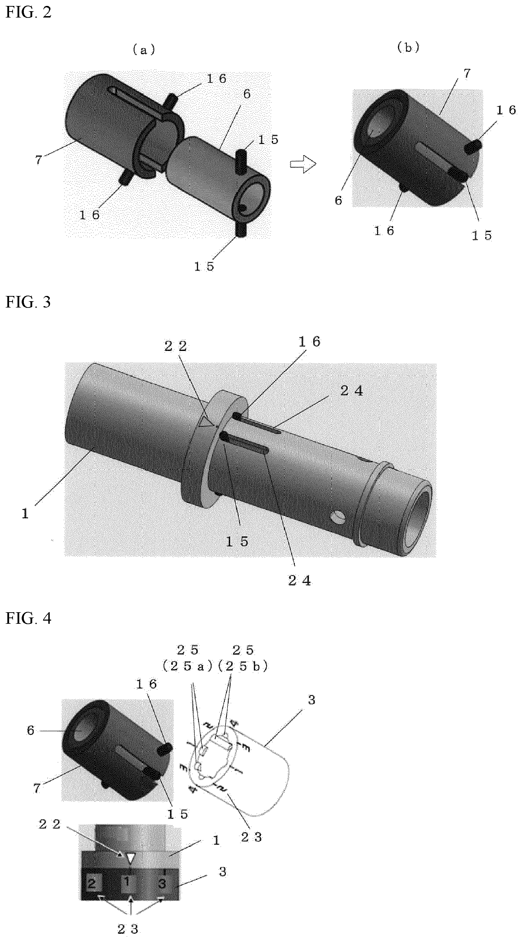

FIGS. 2(a) and 2(b) are diagrams of the spring-receiving inner cylinder 6 and the spring-receiving outer cylinder 7 in FIG. 1(a). FIG. 2(a) is an external view of the spring-receiving inner cylinder 6 and the spring-receiving outer cylinder 7 before they are assembled. FIG. 2(b) shows the state where the spring-receiving inner cylinder 6 has been inserted into the spring-receiving outer cylinder 7. Because the spring-receiving outer cylinder 7 has slits for receiving the long pins 15, the spring-receiving inner cylinder 6 having the long pins 15 can be inserted into the spring-receiving outer cylinder 7. In the state where the spring-receiving inner cylinder 6 has been inserted into the spring-receiving outer cylinder 7, the two long pins 15, 15, protrude through both sides of the spring-receiving outer cylinder 7, and the two short pins 16, 16, are apart from the long pins 15, 15, by 45° to protrude on both sides of the spring-receiving outer cylinder 7.

FIG. 3 shows the shank 1 where the step cover 3 has been removed. The shank 1 has four slots from where the long pins 15, 15, and short pins 16, 16, can protrude. The long pins 15, 15, and short pins 16, 16, can move along the four slots. The triangular mark 22 is stamped on the shank 1, which indicates the load while deburring. In FIG. 3, the long pin 15 protrudes at the location corresponding to the triangular mark 22, and the short pin 16 protrudes apart from the long pin 15 by 45°. The positional relationship between the triangular mark 22, the long pin 15, and the short pin 16 does not change after the spring-receiving inner cylinder 6 and the spring-receiving outer cylinder 7 have been assembled.

FIG. 4 illustrates a view showing the state where the spring-receiving inner cylinder 6 has been inserted into the spring-receiving outer cylinder 7, an external view of the step cover 3, and a view of the side surface of the upper part of the step cover 3. The step number 23 is stamped on the outer surface of the step cover 3 clockwise in the order of [1], [2], [4], [3], [1], [2], [4], [3], as seen from the top. The stamped numbers [1] and [3] correspond to shallow grooves and the stamped numbers [2] and [4] correspond to deep grooves. In the state where the spring-receiving inner cylinder 6 and the spring-receiving outer cylinder 7 have been assembled, the stamped number [1] of the step number 23 on the step cover 3 is aligned with the triangular mark 22. Therefore, the long pins 15, 15, are engaged with the shallow grooves and the short pins 16, 16, are engaged with the shallow grooves.

With rotating the step cover 3 in 45° increments while pulling it downward against the biasing force of the step spring 12, align any of the stamped numbers [1] to [4] of the step number 23 on the step cover 3 with the triangular mark 22 on the shank 1. This makes it possible to change the four load levels shown in Table 1. How to change the four load levels is explained in the following.

**Table 1**

| Stamped number indicated by a triangular mark | [1] | [2] | [3] | [4] |
|---|---|---|---|---|
| Load | Small (Weak) | Medium (Normal) | Large (Strong) | Maximum (Strong) |

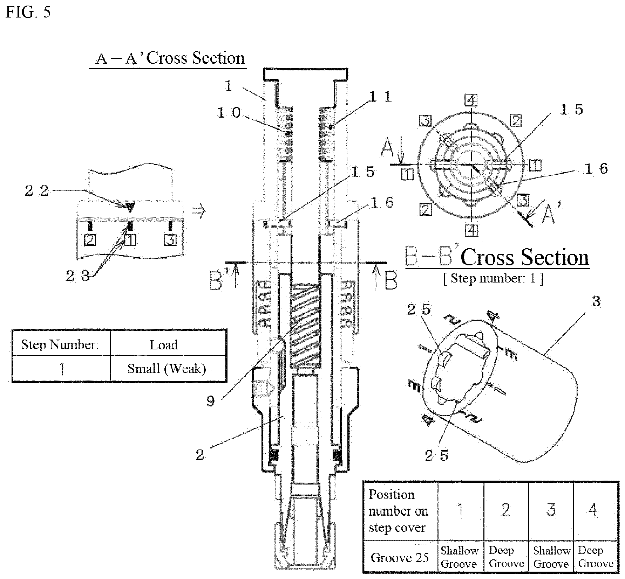

FIG. 5 illustrates the case in which the deburring holder 100 of the present invention operates only with the main compression spring 9. The stamped number [1] on the step cover 3 is aligned with the triangular mark 22. The load setting in Table 1 is small (weak). The main compression spring 9 is to be a small spring with a spring constant k1. On the inner surface of the step cover 3, the shallow grooves are provided at the positions corresponding to the stamped numbers [1] and [3], and the deep grooves at the positions corresponding to the stamped numbers [2] and [4]. If the step cover 3 is rotated and the stamped number [1] is aligned with the triangular mark 22, as shown in the B-B' cross section, the long pins 15, 15, enter the shallow grooves corresponding to the stamped numbers [1], [1], and the short pins 16, 16, enter the shallow grooves corresponding to the stamped numbers [3], [3]. Thus, when the long pins 15, 15, and short pins 16, 16, enter the shallow grooves respectively, both the spring-receiving inner cylinder 6 and the spring-receiving outer cylinder 7 are held outside the range of movement of the main body 2 in the vertical direction. Therefore, only the main compression spring 9 receives the load from the deburring tool 21. As shown in the A-A' cross-section in FIG. 5, only the main compression spring 9 contracts due to the load from the deburring tool 21, and the main body 2 also rises. However, because the spring-receiving inner cylinder 6 and spring-receiving outer cylinder 7 are blocked by the shallow grooves on the inner surface of the step cover 3, and do not contact the main body 2, the first sub-compression spring 10 and the second sub-compression spring 11 do not operate.

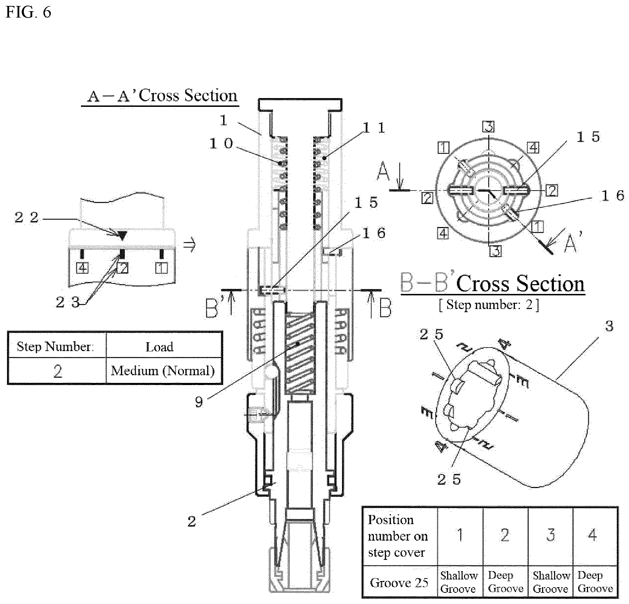

FIG. 6 illustrates the case in which the deburring holder 100 operates with the main compression spring 9 and the first sub-compression spring 10. The stamped number [2] on the step cover 3 is aligned with the triangular mark 22. The load setting in Table 1 is medium (normal). The spring constant of the main compression spring 9 is k1 and the spring constant of the first sub-compression spring 10 is k2, where the value of k2 is larger than that of k1 (k1<k2). On the inner surface of the step cover 3, the shallow grooves are provided at the positions corresponding to the stamped numbers [1] and [3], and the deep grooves at the positions corresponding to the stamped numbers [2] and [4]. If the step cover 3 is rotated and the stamped number [2] is aligned with the triangular mark 22, as shown in the B-B' cross section, the long pins 15, 15, enter the deep grooves corresponding to the stamped numbers [2], [2], and the short pins 16, 16, enter the shallow grooves corresponding to the stamped numbers [1], [1]. If the long pins 15, 15, enter the deep grooves, the spring-receiving inner cylinder 6 descends until it touches the top portion of the main body 2. If the short pins 16, 16, enter the shallow grooves, the spring-receiving outer cylinder 7 is held outside the range of movement of the main body 2 in the vertical direction. Therefore, the main compression spring 9 and the first sub-compression spring 10 are arranged in parallel to receive the load from the deburring tool 21. As shown in the A-A' cross-section in FIG. 6, the load from the deburring tool 21 causes the main compression spring 9 and the first sub-compression spring 10 to contract. If the main body 2 rises, the main body 2 does not contact the spring-receiving outer cylinder 7, so that the second sub-compression spring 11 does not operate.

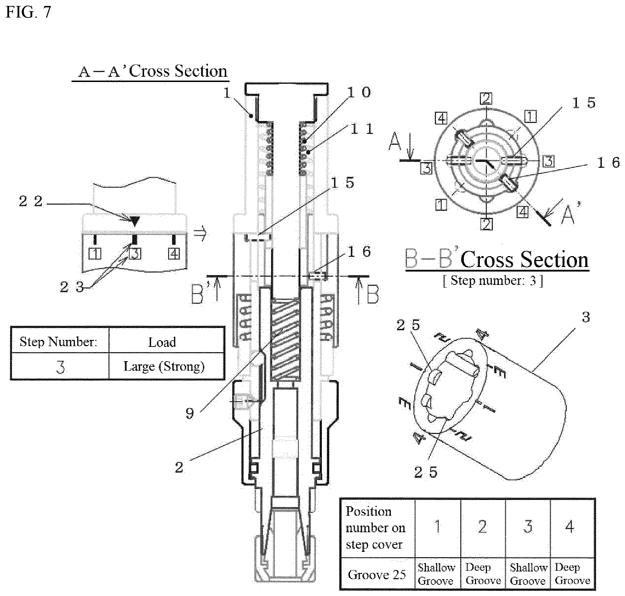

FIG. 7 illustrates the case in which the deburring holder 100 operates with the main compression spring 9 and the second sub-compression spring 11. The stamped number [3] on the step cover 3 is aligned with the triangular mark 22. The load setting in Table 1 is large (strong). The spring constant of the main compression spring 9 is k1, the spring constant of the first sub-compression spring 10 is k2, and the spring constant of the second sub-compression spring 11 is k3, where the value of k3 is to be larger than that of k2 (k2<k3). On the inner surface of the step cover 3, the shallow grooves are provided at the positions corresponding to the stamped numbers [1] and [3], and the deep grooves at the positions corresponding to the stamped numbers [2] and [4]. If the step cover 3 is rotated and the stamped number [3] is aligned with the triangular mark 22, as shown in the B-B' cross section, the long pins 15, 15, enter the shallow grooves corresponding to the stamped numbers [3], [3], and the short pins 16, 16, enter the shallow grooves corresponding to the stamped numbers [4], [4]. If the short pins 15, 15, enter the shallow grooves, the spring-receiving inner cylinder 6 is held outside the range of movement of the main body 2 in the vertical direction. If the long pins 16, 16, enter the deep grooves, the spring-receiving outer cylinder 7 descends until it touches the top portion of the main body 2. Therefore, the main compression spring 9 and the second sub-compression spring 11 are arranged in parallel to receive the load from the deburring tool 21. As shown in the A-A' cross-section in FIG. 7, the load from the deburring tool 21 causes the main compression spring 9 and the second sub-compression spring 11 to contract. If the main body 2 rises, the main body 2 does not contact the spring-receiving inner cylinder 6, so that the first sub-compression spring 10 does not operate.

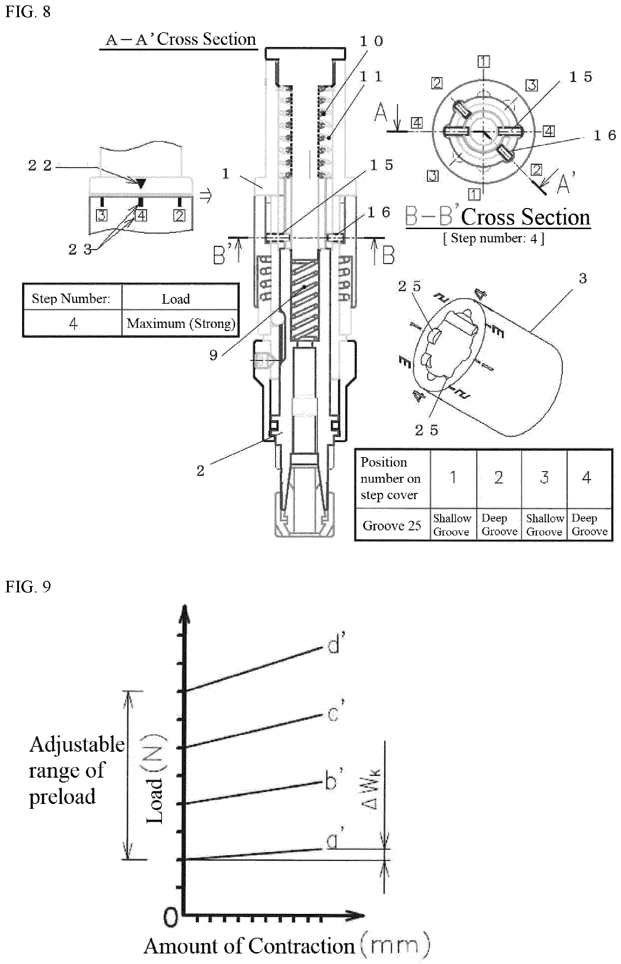

FIG. 8 illustrates the case in which the deburring holder 100 operates with the main compression spring 9, the first sub-compression spring 10, and the second sub-compression spring 11. The stamped number [4] on the step cover 3 is aligned with the triangular mark 22. The load setting in Table 1 is maximum (strong). The spring constant of the main compression spring 9 is k1, the spring constant of the first sub-compression spring 10 is k2, and the spring constant of the second sub-compression spring 11 is k3, where the value of k3 is to be larger than that of k2 (k2<k3). On the inner surface of the step cover 3, the shallow grooves are provided at the positions corresponding to the stamped numbers [1] and [3], and the deep grooves at the positions corresponding to the stamped numbers [2] and [4]. If the step cover 3 is rotated and the stamped number [4] is aligned with the triangular mark 22, as shown in the B-B' cross section, the long pins 15, 15, enter the deep grooves corresponding to the stamped numbers [4], [4], and the short pins 16, 16 enter the deep grooves corresponding to the stamped numbers [2], [2]. If the long pins 15, 15, enter the deep grooves, the spring-receiving inner cylinder 6 descends until it touches the top portion of the main body 2. If the short pins 16, 16 enter the deep grooves, the spring-receiving outer cylinder 7 also descends until it touches the top portion of the main body 2. Therefore, the main compression spring 9, the first sub-compression spring 10, and the second sub-compression spring 11 are arranged in parallel to receive the load from the deburring tool 21. As shown in the A-A' cross-section in FIG. 8, the load from the deburring tool 21 causes the main compression spring 9, the first sub-compression spring 10, and the second sub-compression spring 11 to contract.

FIG. 9 is a graph showing the relationship between the load (N) and the amount of contraction (mm) of the deburring holder 100 according to the present invention. The a', b', c', and d' correspond to the stamped numbers [1], [2], [3], and [4], respectively, shown in Table 1 referred to as the stamped number indicated by the triangular mark. In a' where only the main compression spring 9 is used, because the spring constant k1 of the main compression spring 9 is small, the slope is small, and thus ΔWk is small. In b' where the main compression spring 9 and the first sub-compression spring 10 are used in parallel, the slope is greater than that of a'. In c' where the main compression spring 9 and the second sub-compression spring 11 are used in parallel, the slope is greater than that of b'. In d' where the main compression spring 9, the first sub-compression spring 10, and the second sub-compression spring 11 are used in parallel, the slope is greater than that of c'. While preloads are applied to the springs in a', b', c', and d', the preload of the main compression spring 9 can be adjusted by turning the adjusting screw 18 shown in FIG. 1.

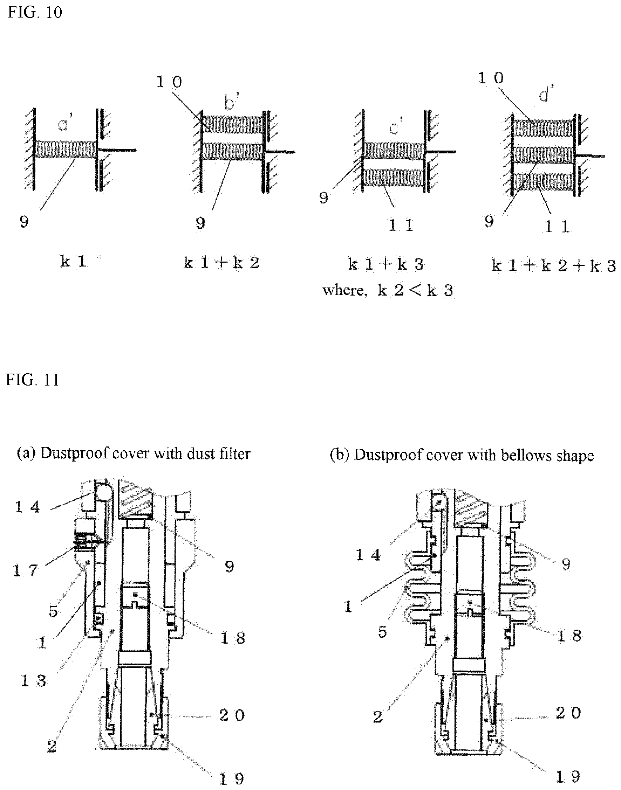

FIG. 10 illustrates the combination of the main compression spring 9, the first sub-compression spring 10, and the second sub-compression spring 11. The signs a', b', c', and d' correspond to the stamped numbers [1], [2], [3], and [4], respectively, shown in Table 1 referred to as the stamped number indicated by the triangular mark. If each of the spring constants of the main compression spring 9, the first sub-compression spring 10, and the second sub-compression spring 11 is k1, k2, and k3, respectively, each of the spring constants of a', b', c', and d' is k1, k1+k2, k1+k3, and k1+k2+k3, respectively, because the springs are used in parallel. Because k2<k3, the spring constant can be gradually increased.

FIGs. 11(a) and 11(b) show the installation situation of the dustproof cover 5. FIG. 11(a) is a cut-out view of the lower portion of the deburring holder 100 in FIG. 1, where a dust filter 13 is provided to the dustproof cover 5. FIG. 11(b) shows the case in which the dustproof cover 5 is configured to have a bellows shape. The shank 1 extends downward to cover the lower side of the main body 2. Because the main body 2 is a movable component that extends and contracts due to the load from the deburring tool 21, fine powders such as iron powder produced by deburring could get into the slight gap between the lower end of the shank 1 and the main body 2. In FIG. 11(a), the dustproof cover 5 with the dust filter 13 is provided on the outer side of the lower part of the main body 2. This allows iron powder to be trapped by the dust filter 13, and prevents the powder from entering the gap between the lower end of the shank 1 and the main body 2. In FIG. 11(b), the dust cover 5 configured to have a bellows shape is provided, where the lower end of the dust cover 5 is fixed to the main body 2. The bellows shape allows the dust cover 5 to extend and contract in accordance with the vertical movement of the main body 2, while preventing iron powder from entering the gap between the shank 1 and the main body 2. No load is applied to the point where the lower end of the dust cover 5 is fixed to the main body 2.

In this example (FIGS. 1 to 11), the deburring holder 100 is provided with three springs including the main compression spring 9, the first sub-compression spring 10, and the second sub-compression spring 11; but instead, the deburring holder 100 may include only two springs including the main compression spring 9 and the first sub-compression spring 10. In such a case, the load setting of the deburring holder 100 is in two levels, and the spring-receiving cylinder is formed by a single cylinder. The deburring holder 100 may include a main compression spring 9 and three sub-compression springs. In such a case, the load setting of the deburring holder 100 is in eight levels, where the spring-receiving cylinder consists of an inner cylinder, a middle cylinder, and an outer cylinder.

### Industrial Applicability

The present invention provides a deburring holder that is provided with multiple compression springs, in which the combination of the compression springs can be changed according to the type of workpiece. This deburring holder is attached to machine tools of machining centers or robots for use.

### Description of Reference Numerals

- 1.: shank
- 2.: main body
- 3.: step cover
- 4.: cover
- 5.: dustproof cover
- 6.: spring-receiving inner cylinder
- 7.: spring-receiving outer cylinder
- 8.: shank cap
- 9.: main compression spring
- 10.: first sub-compression spring
- 11.: second sub-compression spring
- 12.: step spring
- 13.: dust filter
- 14.: steel ball
- 15.: long pin
- 16.: short pin
- 17.: set screw
- 18.: adjusting screw
- 19.: nut
- 20.: tapered collet
- 21.: deburring tool
- 22.: triangular mark
- 23.: step number
- 24.: slot of shank
- 25.: groove of step cover
- 25a.: shallow groove
- 25b.: deep groove
- 100.: deburring holder

## Claims

1. A deburring holder into which a deburring tool is to be removably inserted from a lower end of a main body, the deburring holder comprising:
a main compression spring provided inside the main body to directly receive a load from the deburring tool via the main body;
one or more sub-compression springs to receive the load from the deburring tool via a spring-receiving cylinder provided inside the main body; and
a step cover rotatably provided on the main body to be engaged with or disengaged from the spring-receiving cylinder, the step cover allowing for changing the combination of the compression springs between a state in which only the main compression spring receives the load and a state in which the step cover engaging with the spring-receiving cylinder allows any one of the sub-compression springs or two or more of the sub-compression springs to receive the load with the main compression spring in parallel.

2. A deburring holder into which a deburring tool is to be removably inserted from a lower end of a main body, the deburring holder comprising:
a main compression spring provided inside the main body to directly receive a load from the deburring tool via the main body;
a first sub-compression spring to receive a load from the deburring tool via a spring-receiving inner cylinder;
a second sub-compression spring to receive a load from the deburring tool via a spring-receiving outer cylinder, the second sub-compression spring having a spring constant larger than the spring constant the first sub-compression spring has; and
a step cover rotatably provided on the main body to be engaged with or disengaged from the spring-receiving inner cylinder and the spring-receiving outer cylinder, the step cover allowing for changing the combination of the compression springs between a state in which only the main compression spring receives the load, a state in which the step cover engaging with the spring-receiving inner cylinder allows the main compression spring and the first sub-compression spring to receive the load in parallel, a state in which the step cover engaging with the spring-receiving outer cylinder allows the main compression spring and the second sub-compression spring to receive the load in parallel, and a state in which the step cover engaging with the spring-receiving inner cylinder and the spring-receiving outer cylinder allows the main compression spring, the first sub-compression spring, and the second sub-compression spring to receive the load in parallel.

3. The deburring holder according to Claim 2 further comprising long pins provided on the spring-receiving inner cylinder and short pins provided on the spring-receiving outer cylinder, the spring-receiving inner cylinder being assembled inside the spring-receiving outer cylinder,
wherein the combination of the compression springs is changed by the long pins and short pins on the assembled cylinders being engaged with any of the combinations of grooves that are formed on the inner surface of the step cover, the combinations being shallow grooves and shallow grooves, shallow grooves and deep grooves, and deep grooves and shallow grooves.

4. The deburring holder according to Claim 3 further comprising a step spring that biases the step cover upward.

5. The deburring holder according to Claim 2 further comprising a dustproof cover with a dust filter provided on the outer side of the lower part of the main body.

6. The deburring holder according to Claim 2 further comprising a dustproof cover having a bellows shape provided on the outer side of the lower part of the main body, the dustproof cover being fixed to the main body at the cover's lower end to extend and contract in accordance with the vertical movement of the main body.
